# FASCICULE DE BREVET EUROPEEN

(11) **EP 0 414 846 B1**
(45) Date de publication et mention de la délivrance du brevet: **11.05.1994**
(21) Numéro de dépôt: 90902755.9
(22) Date de dépôt: 21.02.1990
(51) Int. Cl.: H04N 7/167

(54) **SYSTEME DE TELEVISION A PEAGE UTILISANT UNE CARTE A MEMOIRE ASSOCIEE A UN DECODEUR**
GEBÜHRENFERNSEHSYSTEM, DAS EINE SPEICHERKARTE, VERBUNDEN MIT EINEM DEKODER, VERWENDET
PRE-PAYMENT TELEVISION SYSTEM USING A MEMORY CARD ASSOCIATED WITH A DECODER

(30) Priorité: 22.02.1989 FR 8902472
(43) Date de publication de la demande: 06.03.1991
(73) Titulaire: NAGRA PLUS S.A., CH-1033 Cheseaux-sur-Lausanne (CH)
(72) Inventeur: KUDELSKI, André, CH-1023 Crissier (CH)
(74) Mandataire: Cronin, Brian Harold John
(86) Numéro de dépôt international: CH9000040
(87) Numéro de publication internationale: WO9010354

(56) Documents cités:
- EP-A- 0 021 938
- EP-A- 0 247 703
- WO-A-83/01881
- WO-A-84/00656

## Description

La présente invention concerne un système ou dispositif de télévision à péage utilisant une carte à mémoire associée à un décodeur.

Dans les systèmes ou dispositifs de télévision à péage, le signal vidéo et audio destiné à la diffusion est tout d'abord brouillé, selon un procédé quelconque, puis diffusé par voies hertziennes, par satellites ou par câbles et enfin reçu et débrouillé au niveau de chaque client à l'aide d'un appareil spécifique appelé communément décodeur.

Dans les systèmes de télévision à péage perfectionnés connus actuellement, le décodeur comporte essentiellement un dispositif électronique destiné au debrouillage de l'image vidéo. A ce décodeur, est associée une carte à mémoire destinée principalement au contrôle d'accès aux émissions et à la gestion du crédit nécessaire à l'achat de ces émissions.

Dans de tels systèmes de télévision à péage, on édite au niveau de l'émission un mot arbitraire destiné à l'initialisation d'un générateur pseudo-aléatoire qui détermine une table de codes. On utilise cette table de codes pour effectuer le brouillage du signal vidéo, puis on chiffre ce mot d'initialisation en utilisant une clé de chiffrage prédéterminée, puis on diffuse ce mot d'initialisation chiffré avec le signal vidéo. A la réception, au niveau du décodeur du client, on déchiffre le mot d'initialisation en utilisant la même clé de chiffrage prédéterminée, de façon à le restituer en clair pour l'utiliser comme mot d'initialisation d'un générateur pseudo-aléatoire identique à celui utilisé pour l'émission et qui génère en conséquence une table de codes identique. On utilise ensuite cette table de codes pour effectuer le débrouillage du signal vidéo qui peut alors être envoyé au téléviseur.

Dans la suite de ce texte, on appelle "prestataire" toute personne ou toute entreprise qui a le droit de diffuser des émissions brouillées (on dit aussi codées) et qui met à la disposition de ses clients un décodeur spécial ou une carte spéciale venant s'adapter à un décodeur pouvant servir aussi à décoder des émissions provenant d'autres "prestataires". Dans la suite de ce texte, on appelle "carte mère" une carte ou un dispositif pour le chiffrage du mot d'initialisation en utilisant une clé spécifique d'un prestataire et on appelle "carte de client" la carte ou le dispositif correspondant mis à la disposition des clients.

La carte à mémoire présente de nombreux avantages et, entre autre celui de permettre une exploitation simultanée par plusieurs prestataires, mais peut présenter aussi certains inconvénients liés aux risques de piratage que nous allons exposer maintenant. Dans le cas d'une carte à mémoire destinée à l'exploitation multi-prestataires, un prestataire A peut inscrire sur chaque carte ses clés et ses droits et un autre prestataire B peut inscrire sur les mêmes cartes ou sur d'autres cartes ses clés et ses droits d'une façon indépendante. Dans ce cas, il est envisageable qu'une personne bien informée se procure une carte de client et l'utilise pour déchiffrer (on dit aussi décrypter) le mot d'initialisation envoyé chiffré avec le signal vidéo du prestataire A, puis utilise une carte mère pour chiffrer ce mot d'initialisation selon la clé différente utilisée par un autre prestataire, par exemple par le prestataire B, et envoie ainsi à des personnes éventuellement complices les émissions du prestataire A transposées dans le réseau de cartes du prestataire B.

L'invention vise à remédier à l'inconvénient précédemment cité.

La présente invention concerne donc un système de télévision à péage utilisant une carte à mémoire associée à un décodeur.

Selon une caractéristique de l'invention, du côté de l'émission, un générateur de nombres délivre un code aléatoire qui est envoyé à l'entrée d'une carte mère qui chiffre ce code en utilisant une clé prédéterminée, le code ainsi chiffré est diffusé avec le signal vidéo, un premier dispositif reçoit en entrées d'une part le code aléatoire et d'autre part le code chiffré par la carte mère et effectue une combinaison numérique déterminée de ces deux codes, cette combinaison constituant le mot d'initialisation d'un générateur pseudo-aléatoire destiné à fournir une table de codes destinée à effectuer le brouillage du signal vidéo et, du côté de la réception, le décodeur reçoit le code chiffré qui est déchiffré par une carte de client, un second dispositif reçoit en entrées d'une part le code chiffré et d'autre part le code déchiffré par la carte de client et effectue une combinaison numérique de ces deux codes identique à celle du premier dispositif, le résultat de cette combinaison constituant le mot d'initialisation d'un autre générateur pseudo-aléatoire fournissant une table de codes identique à celle de l'émission et destinée à effectuer le débrouillage du signal vidéo.

Selon un mode de réalisation de l'invention, les premier et second dispositifs effectuent une même combinaison numérique dont la fonction est telle que la fonction réciproque ne puisse être déterminée que par un test exhaustif.

Selon un autre mode de réalisation de l'invention, les premier et second dispositifs effectuent une même combinaison numérique de nombres binaires et dont la fonction est un OU exclusif.

D'autres caractéristiques et avantages de l'invention apparaîtront lors de la description d'un exemple de réalisation qui va suivre, illustrée par les figures annexées parmi lesquelles :
- la figure 1 montre le principe de base d'un système de télévision à péage ;
- la figure 2 représente le principe de fonctionnement d'un système de télévision à péage utilisant une carte à mémoire, connu actuellement, et illustre aussi un mode de piratage possible ; et
- la figure 3 représente le principe de fonctionnement d'un système de télévision à péage selon l'invention et illustre aussi l'impossibilité du piratage.

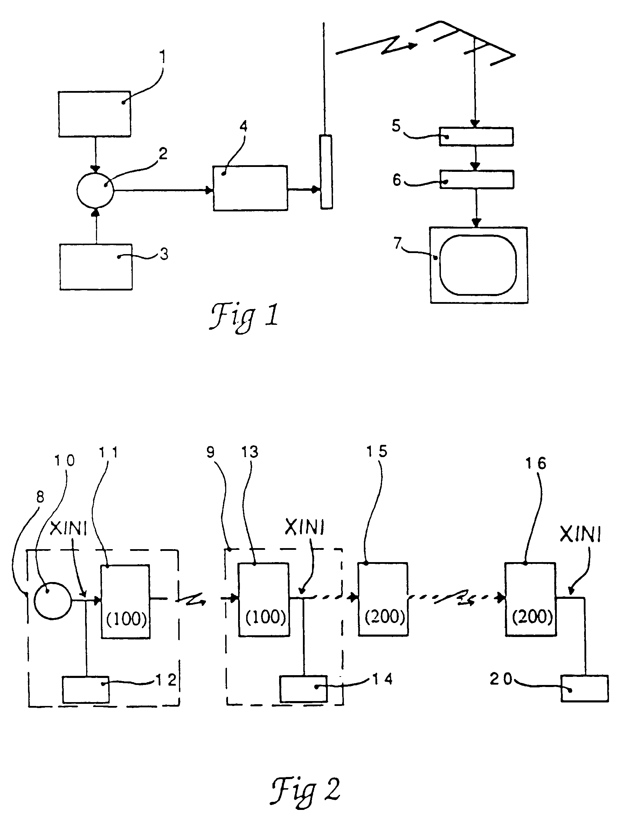

En figure 1, on distingue un dispositif 1, par exemple un microordinateur, à l'aide duquel le prestataire génère des données relatives aux émissions prévues et utiles aux clients. Ces données sont associées en 2 au signal vidéo délivré par un magnétoscope 3 ou tout autre système. On utilise en général les lignes de retour du balayage vertical du signal vidéo pour transmettre de telles données.

Le signal vidéo et les données qui y sont associées sont ensuite brouillés à l'aide d'un brouilleur 4 qui rend l'image inutilisable par une personne non cliente. Ce signal brouillé est transmis par liaison hertzienne, par satellite ou par câble au récepteur 5 de chaque abonné, et un débrouilleur ou décodeur 6 permet une restitution de l'émission sur un téléviseur 7 avec une qualité normale.

Sur la figure 2, on distingue un système de brouillage 8 à l'émission et un système de débrouillage, encore appelé décodeur, 9 à la réception chez un client abonné à ce système de télévision à péage.

Dans le système de brouillage 8, on distingue, entre autres un générateur de nombres au hasard 10 qui délivre un mot d'initialisation XINI qui est envoyé à l'entrée d'une carte mère 11. Cette carte mère 11 chiffre le mot d'initialisation XINI selon une clé prédéterminée 100, le mot ainsi chiffré étant associé au signal vidéo. Parallèlement, le mot d'initialisation XINI sert à initialiser un générateur pseudo-aléatoire 12 qui délivre ainsi en sortie une certaine table de codes qui sert à conférer un certain brouillage de l'image vidéo et du son. A la réception 9, on retrouve une carte de client 13 qui sert à déchiffrer le mot d'initialisation chiffré tel qu'il est reçu, le déchiffrage s'effectuant à partir de la même clé 100, afin de retrouver en sortie le mot d'initialisation XINI en clair. Ce mot XINI est alors envoyé pour initialiser un générateur pseudo-aléatoire 14 de conception identique à celle du générateur pseudo-aléatoire 12 de l'émission. Le générateur 14 produit en conséquence une table de codes identique à celle générée à l'émission et permettant ainsi le débrouillage de l'image vidéo émise. On peut modifier à tout moment, par exemple toutes les secondes ou toutes les dix secondes, le mot d'initialisation XINI sans perturber une réception autorisée chez le client.

Ce système fonctionne très bien mais peut permettre certains piratages élaborés par des personnes initiées, comme nous allons l'expliquer maintenant. Il faut faire remarquer d'abord que plusieurs prestataires peuvent utiliser ensemble un même réseau de décodeurs à cartes à mémoire et même utiliser les mêmes cartes à mémoire. Un prestataire A peut inscrire sa clé 100 et ses droits et un autre prestataire B peut inscrire sa clé 200 et ses droits d'une façon indépendante et sur le même réseau de décodeurs à cartes. Une personne bien informée, par exemple travaillant chez un prestataire, peut facilement avec une carte de client 13 déchiffrer ou décrypter le mot d'initialisation XINI et l'extraire en clair, puis se procurer une carte mère 15 programmée pour chiffrer le mot d'initialisation selon la clé 200 d'un autre prestataire, puis envoyer en association avec le signal vidéo de l'émission du prestataire A dans un réseau, par exemple à câbles, auquel sont connectés des personnes, munies de cartes de client 16 de clé 200, et qui peuvent alors voir l'émission du prestataire A transposée dans le système du prestataire B.

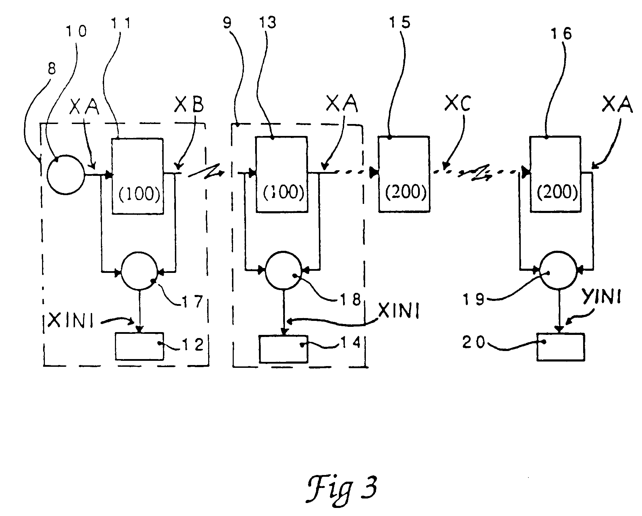

Sur la figure 3, on a représenté un système de télévision à péage et à carte à mémoire selon l'invention et avec lequel on vérifiera que le mode de piratage précédemment décrit est impossible. On distingue sur la figure 3 certains éléments identiques à ceux de l'art antérieur tel que représenté en figure 2 et que l'on a repéré par des références identiques. Le générateur de nombres au hasard 10 délivre un nombre que l'on nomme par la suite code aléatoire XA. La carte mère 11 chiffre selon la clé 100 ce code XA et les cartes de client 13 le déchiffrent selon la clé 100 pour retrouver le même code XAL.

Un premier dispositif 17 reçoit en entrées d'une part le code aléatoire XA et d'autre part le code XB chiffré par la carte mère 11 et effectue une combinaison numérique déterminée de ces deux codes, cette combinaison constituant le mot d'initialisation XINI du générateur pseudo-aléatoire 12 destiné à fournir une table de codes destinée à effectuer le brouillage du signal vidéo. De la même manière, un second dispositif 18 reçoit en entrées d'une part le code chiffré XB et d'autre part le code déchiffré par la carte de client 13, ce code étant identique à XA, et effectue une combinaison numérique de ces deux codes, cette combinaison étant identique à celle du premier dispositif 17 de telle sorte que le générateur pseudo-aléatoire 14 reçoive le même mot d'initialisation XINI que le générateur 12 et fournisse une table de codes identique destinée à effectuer donc le débrouillage du signal vidéo. La combinaison numérique des dispositifs 17 et 18 peut être composée simplement d'un OU exclusif ou peut mettre en oeuvre toute fonction connue en soi dont la fonction réciproque ne peut être déterminée que par un test exhaustif. On voit bien que, quelle que soit la fonction de combinaison utilisée à l'identique dans les deux dispositifs 17 et 18, les deux générateurs pseudo-aléatoires 12 et 14 seront initialisés identiquement et le débrouillage sera toujours correctement obtenu, même si le code XA change. Par contre, si le processus de piratage décrit précédemment à partir d'un système classique est appliqué ici, on remarquera qu'il ne fonctionne pas. En effet, la personne initiée pourra, à partir d'une carte de client 13, retrouver en clair le code XA, mais ensuite, la personne chiffrera le code XA avec sa clé 200 et diffusera donc un code chiffré XC différent de XB. Dans le décodeur, on retrouvera bien le code XA grace au déchiffrage de la carte de client 16. Cependant, la combinaison numérique du dispositif 19, bien qu'identique aux dispositifs 17 et 18, donnera un mot d'initialisation YINI du générateur pseudo-aléatoire 20 différent des mots d'initialisation XINI des générateurs 12 ou 14 parce que le dispositif 19 recevra les codes XC et XA et non les codes XB et XA.

## Revendications

1. Système de télévision à péage utilisant une carte à mémoire associée à un décodeur, caractérisé en ce que, du côté de l'émission, un générateur de nombres (10) délivre un code aléatoire (XA) qui est envoyé à l'entrée d'une carte mère (11) qui chiffre ce code en utilisant une clé prédéterminée (100), le code ainsi chiffré est diffusé avec le signal vidéo, un premier dispositif (17) reçoit en entrées d'une part le code aléatoire (XA) et d'autre part le code chiffré (XB) par la carte mère (11) et effectue une combinaison numérique déterminée de ces deux codes, cette combinaison constituant le mot d'initialisation d'un générateur pseudo-aléatoire (12) destiné à fournir une table de codes destinée à effectuer le chiffrage du signal vidéo et, du côté de la réception, le code chiffré (XB) reçu est déchiffré par une carte de client (13), un second dispositif (18) reçoit en entrées d'une part le code chiffré (XB) et d'autre part le code déchiffré (XA) par la carte de client (13) et effectue une combinaison numérique de ces deux codes identique à celle du premier dispositif (17), le résultat de cette combinaison constituant le mot d'initialisation d'un autre générateur pseudo-aléatoire (14) fournissant une table de codes identique à celle de l'émission et destinée à effectuer le débrouillage du signal vidéo.

2. Système de télévision à péage selon la revendication 1, caractérisé en ce que les premier (17) et second (18) dispositifs effectuent une même combinaison numérique dont la fonction est telle que la fonction réciproque ne peut être déterminée que par un test exhaustif.

3. Système de télévision à péage selon la revendication 2, caractérisé en ce que les premier (17) et second (18) dispositifs effectuent une même combinaison numérique de nombres binaires et dont la fonction est un OU exclusif.

## Claims

1. A pay-television system using a memory card associated with a decoder, characterized in that, on a transmission side, a digital generator supplies a random code (XA) which is sent to the input of a main card (11) which enciphers said code, by using a predetermined key (100), so the enciphered code is broadcast with the video signal, a first device (17) receives at its inputs, on the one hand, said random code (XA) and, on the other hand, the code (XB) enciphered by the main card (11) and carries out a predetermined digit combination of those two codes, this combination forming the initialization word of a pseudo-random generator (12) which is intended to supply a code table designed to scramble the video signal, and on the reception side, the received enciphered code (XB) is deciphered by a subscriber card (13), a second device (18) receives at its inputs, on the one hand, the enciphered code (XB) and, on the other hand, the code (XA) deciphered by a subscriber card (13) and carries out a digital combination of those two codes, this combination being identical to the combination carried out by the first device (17), the result of this combination constituting the initialization word for another pseudo-random generator (14) supplying a code table identical to that of the transmission; this code table being designed to unscramble the video signal.

2. A pay-television system according to claim 1, characterized in that the first and second devices (17, 18) carry out the same digital combination whose function is such that the reciprocal function can be determined only by a complete test.

3. A pay-television system according to claim 1, characterized in that the first and the second devices (17, 18) carry out the same digital combination of binary numbers involving an exclusive or logical function.

## Patentansprüche

1. System für gebührenpflichtiges Fernsehen unter Verwendung einer mit Decoder verbundenen Speicherkarte,
**dadurch gekennzeichnet,** daß senderseitig ein Zahlengenerator (10) einen Zufallscode (XA) liefert, welchen man zur Eingabe auf eine Mutterkarte (11) leitet, welche diesen Code chiffriert, indem sie einen vorgegebenen Schlüssel (100) verwendet, dann strahlt man den so chiffrierten Code mit dem Bildsignal aus, ein erstes Gerät (17) empfängt eingangsseitig einerseits den Zufallscode (XA) und andererseits den von der Mutterkarte (11) chiffrierten Code (XB) und führt eine von diesen zwei Codes bestimmte numerische Kombination durch, wobei diese Kombination das Initialisierwort für einen Pseudo-Zufallsgenerator (12) bildet, der dazu dient, eine Codeliste zu erstellen, die wieder dazu dient, die Chiffrierung des Bildsignals auszuführen und, empfängerseitig dechiffriert man den empfangenen chiffrierten Code (XB) mit einer Kundenkarte (13), ein zweites Gerät (18) empfängt eingangsseitig einerseits den chiffrierten Code (XB) und andererseits den von der Kundenkarte (13) dechiffrierten Code (XA) und führt dann eine numerische Kombination dieser zwei Codes aus, die mit der des ersten Gerätes (17) identisch ist, wobei das Ergebnis dieser Kombination das Initialisierwort für einen weiteren Pseudo-Zufallsgenerator (14) bildet, der eine Codeliste liefert, die mit derjenigen auf der Senderseite identisch ist, und die dazu dient, die Entschlüsselung des Bildsignals durchzuführen.

2. System für gebührenpflichtiges Fernsehen nach Anspruch 1,
**dadurch gekennzeichnet,** daß die ersten (17) und zweiten (18) Geräte eine gleiche numerische Kombination ausführen, deren Funktion so ist, daß die reziproke Funktion nur durch einen gründlichen Versuch zu ermitteln ist.

3. System für gebührenpflichtiges Fernsehen nach Anspruch 2,
**dadurch gekennzeichnet,** daß die ersten (17) und zweiten (18) Geräte eine gleiche numerische Kombination von Binärzahlen ausführen und deren Funktion ein exklusives ODER ist.
